# EUROPEAN PATENT SPECIFICATION

(11) **EP 4 417 998 B1**
(45) Date of publication and mention of the grant of the patent: **28.01.2026**
(21) Application number: 24155591.1
(22) Date of filing: 02.02.2024
(51) Int. Cl.: G01S 7/35, G01S 13/58, G01S 13/931

(54) **FINE-NEAR-RANGE ESTIMATION METHOD FOR AUTOMOTIVE RADAR APPLICATIONS**
VERFAHREN ZUR SCHÄTZUNG DES FEINEN NAHBEREICHS FÜR KRAFTFAHRZEUGRADARANWENDUNGEN
PROCÉDÉ D'ESTIMATION DE COURTE PORTÉE POUR DES APPLICATIONS RADAR AUTOMOBILES

(30) Priority: 20.02.2023 RO 202300077
(43) Date of publication of application: 21.08.2024
(73) Proprietor: NXP B.V., 5656 AG Eindhoven (NL)
(72) Inventor: Wu, Ryan Haoyun, 5656AG Eindhoven (NL); Rosu, Filip Alexandru, 5656AG Eindhoven (NL)
(74) Representative: Schmütz, Christian Klaus Johannes

(56) References cited:
- CN-A- 110 967 677
- US-A1- 2014 316 261
- US-A1- 2021 173 042

## Description

### TECHNICAL FIELD

The present invention is directed in general to radar systems and associated methods of operation. In one aspect, the present invention relates to an automotive radar system configured to process received radar signals to identify near-range targets in a complex target environment.

### BACKGROUND

A radar system transmits an electromagnetic signal and receives back reflections of the transmitted signal. The time delay between the transmitted and received signals can be determined and used to calculate the distance and/or the speed of objects causing the reflections. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms.

In order for a vehicle's ADAS system to maintain a safe distance from other nearby vehicles, the distance to the nearest portion of adjacent vehicles must be accurately estimated. In some conventional radar systems, however, a nearby vehicle may present itself as a single-phase center point, which may be located further away than the closest portion of the vehicle. For example, a vehicle's wing mirror may present a strong source of radar reflections causing an ADAS system to determine that a closest portion of the vehicle is located nearby or closer to the vehicle's wing mirrors. In that case, a trailing vehicle employing a radar based ADAS system may not recognize that the rear portion of the vehicle (e.g., the vehicle's rear bumper) represents the actual closest portion of the vehicle and may instead determine that the closest portion of the vehicle is closer to the location of the strong radar reflections from other parts of the vehicle's body. For effective ADAS system operation it is important that the system be able to process the multiple radar reflections that may emanate from multiple locations on an adjacent vehicle's body to determine a location of the closest portion of that vehicle.

US 2021/173042 A1 relates to an automotive radar system formed with multiple-input, multiple-output (MIMO) mono-static (co-located) and multi-static (distributed) radar arrays.

US 2014/316261 A1 relates to radars and more specifically to systems and methods for detecting biometrics using radars.

CN 110 967 677 A relates to a time-frequency domain grading multi-target distinguishing and measuring method in the field of radar signal processing.

### SUMMARY

The invention is set out in the appended set of claims.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1A depicts a simplified schematic block diagram of an automotive radar system which includes a radar device connected to a radar controller processor.
FIG. 1B graphically depicts the processing steps that may be implemented by a processor to process digital signals received from the automotive radar system of FIG. 1A.
FIG. 2 is a simplified schematic block diagram of an automotive radar system that includes the automotive radar system of FIG. 1A that has been modified to include fine near range target estimation processing.
FIG. 3A is a flowchart depicting a method for performing fine near range target detection.
FIG. 3B graphically depicts the processing steps that may be implemented by a processor to process digital signals including performing fine near range target detection in accordance with the method of FIG. 3A.
FIG. 3C is a chart depicting an example of a fine-near range signal that may be an output of the method of FIG. 3A.
FIG. 3D is a chart depicting an output of a conventional object detection algorithm that may be generated in the same scene as that used to generate the example of FIG. 3C.
FIG. 4A depicts a method for performing near-range target estimation that includes a preliminary step of removing bumper reflection and spill-over from the input signals being processed.
FIG. 4B is a flow chart depicting detail of the steps involved in performing step 402 of FIG. 4A.
FIG. 5 is a flowchart depicting a method for performing fine near-range target detection by processing subframe data.
FIG. 6A is a chart depicting examples ranges of targets detected via the subframe target detection approach illustrated in FIG. 5.
FIG. 6B is a chart depicting an output of a conventional object detection algorithm that may be generated in a scene with a number of near-range potential targets.
FIG. 6C is a chart depicting the output of the target detection algorithm of FIG. 5 executed on radar signal data generated by the same scene as that of FIG. 6B.

### DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

In the context of the present disclosure, it will be appreciated that radar systems may be used as sensors in a variety of different applications, including but not limited to automotive radar sensors for road safety and vehicle control systems, such as advanced driver-assistance systems (ADAS) and autonomous driving (AD) systems.

In congested traffic conditions, ADAS (or AD) systems operating within vehicles generally require precise data regarding the closest portions of objects that are in close proximity to an operating vehicle. It is not adequate, for example, for the ADAS system to accurately estimate the general location of a central point of an adjacent vehicle or object, as that location may be inadequate to enable the ADAS system to navigate about that adjacent vehicle or object. Instead, the ADAS system should have knowledge of the closest portion of that adjacent vehicle (e.g., a bumper or wing mirror) or object to ensure that the ADAS system can properly navigate about that adjacent vehicle or object.

Typical vehicle radar systems provide range resolution on the order of tens of centimeters (cm) due to maximum implementable chirp bandwidth constraints of such systems. In combination with those bandwidth constraints, in complex target environments in which nearby objects may present a dense number of radar reflections emanating from multiple locations on a particular target object (e.g., an adjacent vehicle), the nearest range error can be quite high making it difficult for the vehicle radar system to output data that can be used by an ADAS to properly navigate about those nearby objects.

The present disclosure, therefore, provides a system and method that may be implemented to provide improved near-range object detection and ranging as compared to conventional vehicle radar approaches. In this disclosure, near-range objects may be those at distances ranging from 0.5 meters (m) to 5 m, for example. However, in different applications, a different definition of "near-range" may be utilized (e.g., in ADAS applications anticipated for vehicles maneuvering at higher speeds, near-range objects may include those at distances less than 10 m). As described herein, embodiments of the present disclosure may make use of thresholding, sub-framing, super-resolution estimation and one-dimensional clustering, as a means of estimating the location of the nearest portion of a target object with accuracy, even in unfavorable scenarios.

If a radar system processes all signals reflected by an adjacent vehicle (e.g., from the vehicle's bumpers, wing mirrors, windows, door panels, etc.), the resulting calculated central point may not be an accurate indicator of the closest portion of each adjacent vehicle. Due to the complex shape of vehicles (and the complexity of their corresponding radar reflections), or other objects in general, relative to the automotive radar wavelength, multiple phase-centers may be identified in the reflected signals, which may lead to incorrect estimates of the nearest point of contact with adjacent vehicles, which can affect how a corresponding ADAS navigates about those adjacent vehicles or objects.

Typically, frequency modulated continuous wave (FMCW) modulation radars are used to identify the distance, velocity, and/or angle of a radar target, such as a car or pedestrian, by transmitting Linear Frequency Modulation (LFM) waveforms from transmit antennas so that reflected signals from the radar target are received at receive antennas and processed to determine the radial distance, relative radial velocity, and angle (or direction) for the radar target.

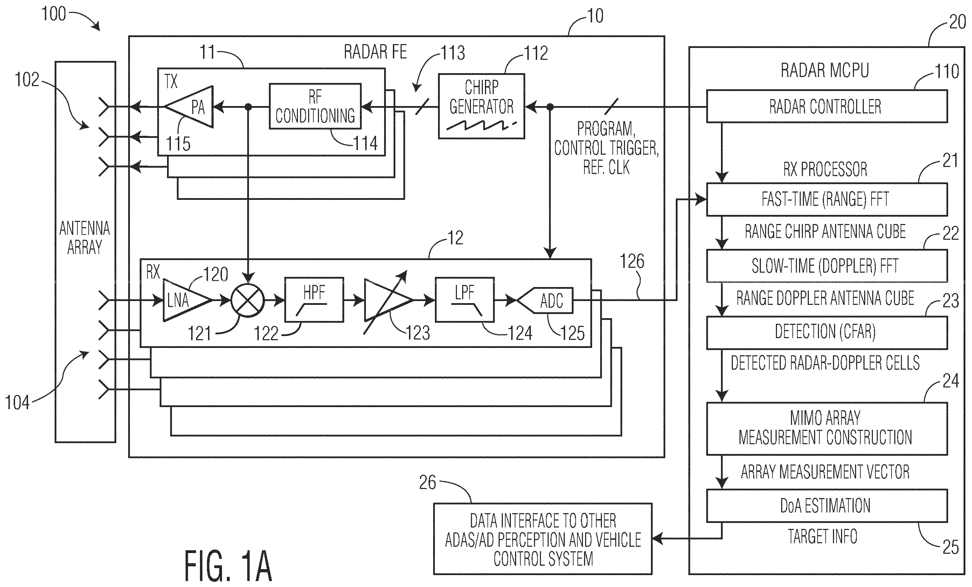

To illustrate the design and operation of a vehicle radar system, reference is now made to FIG. 1A which depicts a simplified schematic block diagram of an automotive radar system 100 signals processing system that includes a radar device 10 connected to a radar controller processor 20. In selected embodiments, the radar device 10 may be embodied as a line-replaceable unit (LRU) or modular component that is designed to be replaced quickly at an operating location. Similarly, the radar controller processor 20 may be embodied as a line-replaceable unit (LRU) or modular component. Although a single or mono-static radar device 10 is shown, it will be appreciated that additional distributed radar devices may be used to form a distributed or multi-static radar. In addition, the depicted radar system 100 may be implemented in integrated circuit form with the device 10 and the radar controller processor 20 formed with separate integrated circuits (chips) or with a single chip, depending on the application.

Within radar system 100 each radar device 10 includes one or more transmitting antenna elements 102 and receiving antenna elements 104 connected, respectively, to one or more radio frequency (RF) transmitter (TX) units 11 and receiver (RX) units 12. For example, each radar device (e.g., 10) is shown as including individual antenna elements 102, 104 (e.g., TX1,i, RX1,j) connected, respectively, to three transmitter modules (e.g., 11) and four receiver modules (e.g., 12), but these numbers are not limiting and other numbers are also possible, such as four transmitter modules 11 and six receiver modules 12, or a single transmitter module 11 and/or a single receiver module 12.

Each radar device 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated. By sequentially using each transmit antenna 102 to transmit successive pulses in the chirp signal 113, each transmitter module 11 operates in a time-multiplexed fashion in relation to other transmitter modules 11 because they are programmed to transmit identical waveforms on a temporally separated schedule.

The radar signal transmitted by the transmitter antenna elements 102 (TX1,i, TX2,i) may by reflected by an object, and part of the reflected radar signal reaches the receiver antenna elements 104 (RX1,i) at the radar device 10. At each receiver module 12, the received (radio frequency) antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first high-pass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses target echo of various delays into multiple sinusoidal tones whose frequencies correspond to the round-trip delay of the echo.

The radar system 100 also includes a radar controller processing unit 20 that is connected to supply input control signals to the radar device 10 (e.g., via controller 110) and to receive therefrom digital output signals (e.g., digital signal 126) generated by the receiver modules 12.

In selected embodiments, the radar controller processing unit 20 may be embodied as a micro-controller unit (MCU) or other processing unit that is configured and arranged for signal processing tasks such as, but not limited to, target identification, computation of target distance, target velocity, and target direction, and generating control signals. The radar controller processing unit 20 may, for example, be configured to generate calibration signals, receive data signals, receive sensor signals, generate frequency spectrum shaping signals (such as ramp generation in the case of FMCW radar) and/or register programming or state machine signals for RF (radio frequency) circuit enablement sequences. In addition, the radar controller processor 20 may be configured to program the transmitter modules 11 to operate in a time-division fashion by sequentially transmitting LFM chirps for coordinated communication between the transmit antenna elements 102 TX1,i, RX1,j.

Radar controller processor 20 is configured to process digital signal 126 to ultimately identify a distance to target objects as well as an angular position of those objects with respect to radar system 100. Digital signal 126 includes a sequence of digital values representing magnitudes of radar signals received by receiving antenna elements 104 captured over time. Typically, each digital value is associated with a particular chirp number and sample number, where a single sample number may capture signals associated with a number of different chirps.

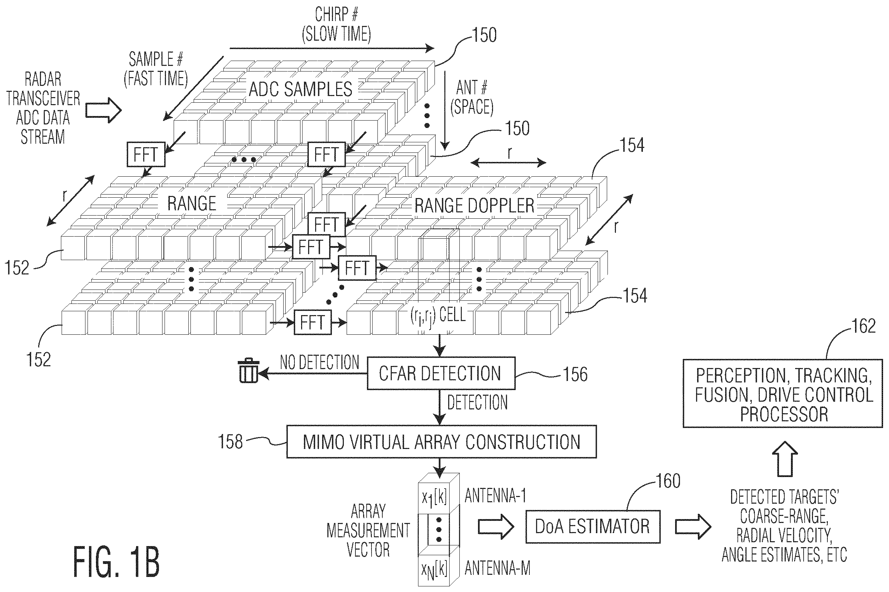

FIG. 1A shows the series of signal processing steps that are implemented by processor 20 in order to properly process digital signal 126 received from radar device 10 to identify potential nearby target objects. To complement FIG. 1A, FIG. 1B graphically depicts the processing steps that may be implemented by processor 20 to process digital signals 126.

The content of digital signals 126 is made up of a series of data frames of that includes a number of digital sample values (e.g., captured by ADCs 125 of receiver units 12) where the sample values are arranged in a two-dimensional matrix that is generated based upon a sequence of pulsed signals. The data structure making up a single captured frame is depicted by matrix 150 in FIG. 1B. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1B, signal processing may involve processing multiple frames of data represented by the several matrixes 150. Typically, a frame of data represented by a matrix 150 is captured for each receive channel. As such, FIG. 1B depicts multiple matrixes 150 that are each associated with a different receive channel and may be received as input data to the signal processing chain.

For each received frame of data represented by matrix 150, radar controller processor 20 initially performs a fast-time range frequency Fourier transform (FFT) 21 (FIG. 1A) to generate new frame data represented by matrix 152. The FFT 21 is executed on the 1-D arrays of data (i.e., the signal) associated with each distinct chirp in the original input matrix 150 to generate a transformed 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1B as matrixes 152 and can be used to determine distance to particular targets as reflected in the range maps.

In a next step radar controller processor 20 performs an additional fast-time range frequency Fourier transform (FFT) 22 (FIG. 1A) (referred to as the range-Doppler FFT) on the range maps to generate new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D transformed signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential target over time from one sample number to the next. With the data frames associated with matrixes 154 generated, it is possible to process the data encoded therein to begin identifying potential targets and, in the case of a detected target, determine its velocity and direction of arrival.

Accordingly, the radar controller processor 20 performs constant false alarm rate (CFAR) target detection 23 (FIG. 1A), 156 (FIG. 1B). This involves the processor 20 analyzing cells in each of the range-Doppler data matrixes 154 that each were originally associated with the same chirp number and sample number (but different receive channels) to determine whether a legitimate target has been detected based on the signals associated with those particular cells. Accordingly, this involves, for the same range bin and velocity bin, analyzing the processed data for each receiver channel to determine whether a target has been detected.

If a potential target has been detected, radar controller processor 20 performs MIMO array measurement construction 24 (FIG. 1A), 158 (FIG. 1B) to determine the direction of arrival (DOA) for each target 25 (FIG. 1A), 160 (FIG. 1B). The final target information, which may include a target identifier, DOA, and other related information is then passed by radar controller processor 20 (in step 26, FIG. 1A, 162, FIG. 1B) to an ADAS or other system configured to utilize the target information to control one or more vehicle system.

As discussed above, a radar system 100 configured to implement the signal processing algorithm depicted in FIGS. 1A and 1B may not accurately determine the locations of the closest portions of objects that are nearby the radar system 100. As discussed above, the radar system 100 may properly detect an object, but may determine the distance to the object as being equal to the distance to the center of the object, or the distance to a portion of the object that presents a high magnitude radar reflection (e.g., a wing mirror of a vehicle). These determined locations may not be equivalent to the closest portion of the object, which may be necessary information to enable proper vehicle navigation without contacting the object.

Consequently, the present disclosure provides a system and method configured to implement fine near range target estimation that can enable more accurate determination of the location of the closest portion of a nearby object.

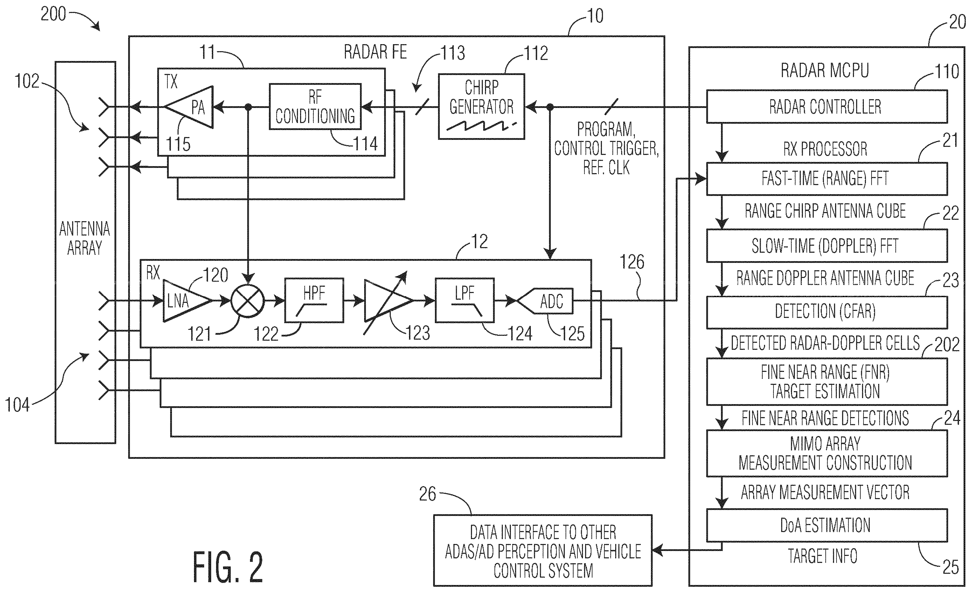

FIG. 2 is a simplified schematic block diagram of an automotive radar system 200 signal processing system that includes the automotive radar system 100 of FIG. 1A and that has been modified to include fine near-range target detection and processing. Components or processing steps in FIG. 2 that have the same element number as a component or processing step in FIG. 1A generally provide the same functionality and/or include the same processing steps.

As shown in FIG. 2, processor 20 is configured to, after performing CFAR target detection 23 by analyzing cells in each of a number of range-Doppler matrixes that were originally associated with the same chirp number and sample number (but different receive channels) to determine whether a legitimate target has been detected based on the signals associated with those particular cells, perform fine near range target detection 202 to identify nearby potential targets whose radar reflections may otherwise be masked by reflections from larger objects or objects with a larger RCS that may be further away.

With the potential near-range targets determined, processor 20 performs MIMO array measurement construction 24 on those potential targets and direction of arrival (DOA) estimation 25 for each target. The final target information, which may include a target identifier, DOA, velocity, and other related information is then passed by radar controller processor 20 to an ADAS or other system configured to utilize the target information to control one or more vehicle system.

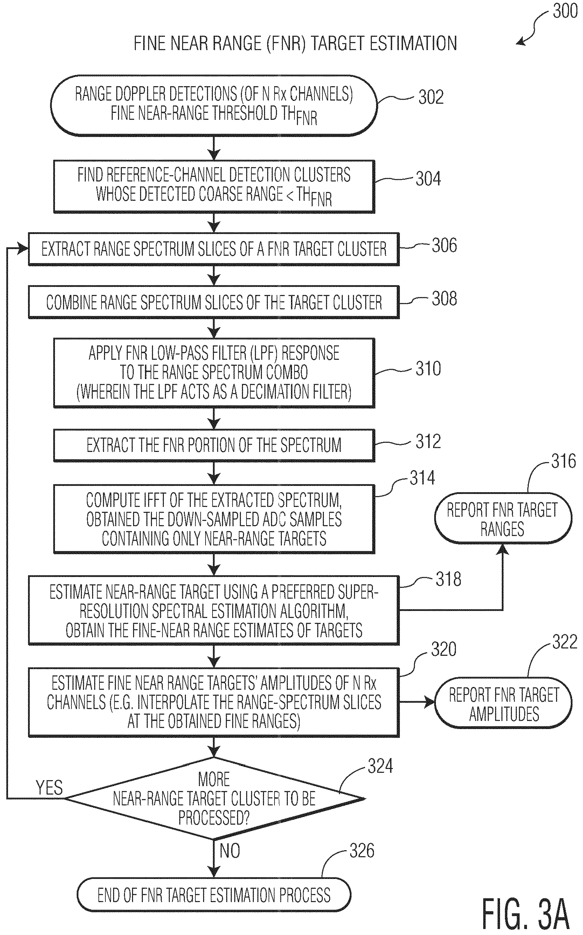

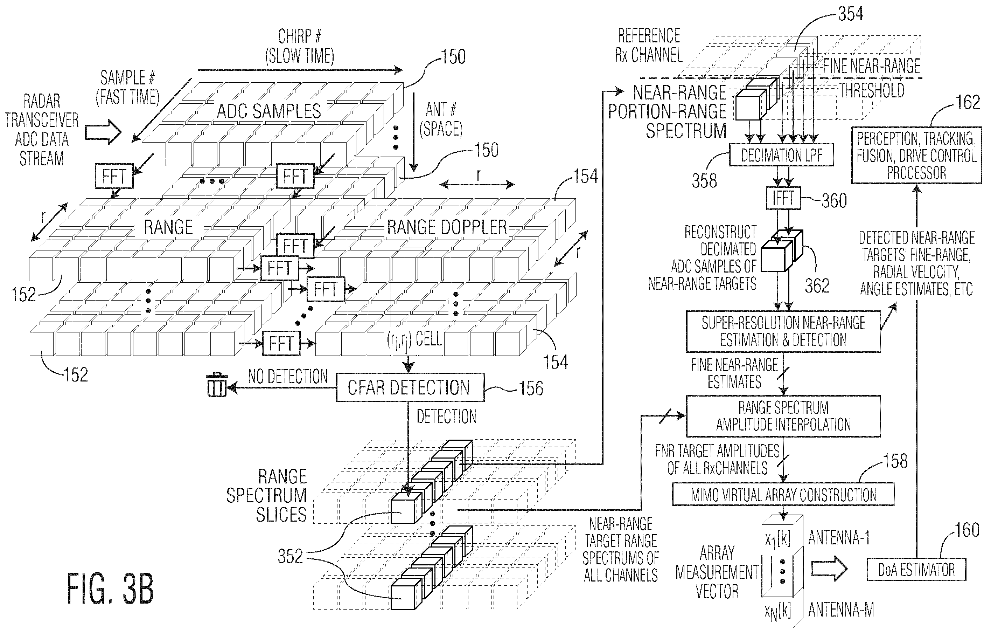

FIG. 3A is a flowchart depicting a method 300 for performing fine near-range target detection 202. Method 300 may be implemented by any suitably configured radar system, such as radar system 200 of FIG. 2. To complement FIG. 3A, FIG. 3B graphically depicts the processing steps that may be implemented by processor 20 to process digital signals including performing fine near range target detection in accordance with method 300. FIG. 3B includes the general signal processing flow of FIG. 1B. As such, any elements or processing steps in FIG. 3B that have the same element number as a component or processing step in FIG. 1B generally provide the same functionality and/or include the same processing steps.

Referring to FIG. 3A, in step 302, method 300 receives as an input an identification of a set of potential targets cluster (e.g., identified by CFAR 156) for processing where potential target clusters are identified for particular ranges within each range-Doppler matrix 54 in a set of channels. The set of channels may include a single channel or combinations of channels for various combinations of range-Doppler matrixes 54. Additionally, at step 302 method 300 receives an identification of a range threshold value (TH_{FNR}) that designates a maximum range for a potential target to be selected for fine near-range processing. In various embodiments, TH_{FNR} may be set to a value between 1 m to 5 m, although other thresholds may be used depending upon the particular application.

In step 304, method 300 includes identifying which of the potential targets (also referred to as target clusters) identified by CFAR 156 have coarse ranges less than the threshold value TH_{FNR}. At the completion of step 304, therefore, a listing of potential near-range target clusters has been identified, where each potential near-range target cluster is associated with a particular coarse range value.

In step 306, a first one of the potential near-range target clusters is selected and processed. Specifically, for the first potential near-range target cluster, the entire signal encoded into the range-Doppler matrix at the range associated with the first target is extracted out of each range Doppler matrix 154, to generate a set of range spectrum slices 352 for that particular near-range target. In some embodiments, this involves only extracting a single signal (i.e., a row) out of each range-Doppler matrix 154 at the particular distance associated with the target cluster although in some embodiments multiple neighboring rows may additionally be extracted, where those neighboring signals have data values that exceed a non-noise threshold magnitude indicating that those neighboring signals may include useful target information for the target cluster.

With the range spectrum slices 352 determined, in step 308 the range slices 352 for each channel are combined to generate a single one-dimensional range cluster 354 for the potential target being processed.

In step 310, a low pass filter (e.g., a smoothing filter) is applied in the frequency domain to the data values of the one-dimensional range cluster 354 to select for near-range targets. The low pass filter is configured to operate as a decimation filter, which may reduce the effective sampling rate associated with the output of the low pass filter and removes data from the range spectrum slices 352 associated with non-near-range targets from the processed signal.

After executing the low pass filter, in step 312 the portion of the signal output by the low pass filter for distances less than TH_{FNR} can be extracted to generate a fine-near range signal (see block 358 in FIG. 3B). Generally, the fine-near range signal represents an up-sampled or super-resolution range-profile containing only information regarding targets in the near-range of the radar system

In step 314 an inverse fast Fourier transform (IFFT) (see block 360 in FIG. 3B) is computed on fine-near range signal output of the low-pass filter to generate a time-domain set of signal magnitudes associated with the near-range target being processed. These output values are depicted by blocks 362 in FIG. 3B. Additionally, these values may be output by method 300, in the output step 326.

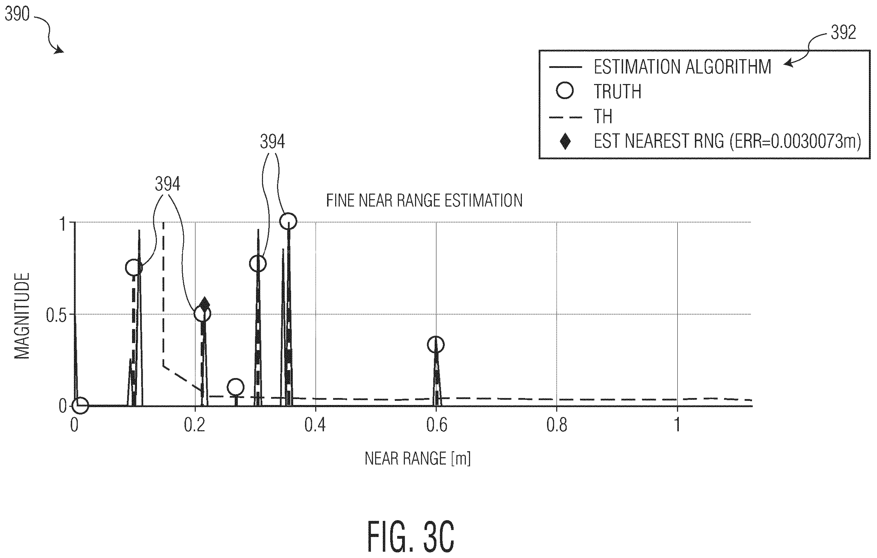

The time domain values generated by step 314 are then processed using super resolution spectral estimation algorithms to identify localized peaks within the time domain values at smaller dimension than conventional estimation techniques (e.g., with a distance resolution that is smaller than the distance covered by the time domain values generated by step 314). At this point in the algorithm, the time domain values comprise a range profile that describes, at different distances away from the radar transmitter (e.g., transmitting antenna elements 102) a magnitude of the received radar signal at that distance. An example of this approach is illustrated in FIG. 3C, which is a chart 390 depicting an example of a fine-near range signal that may be generated by the low pass filter. In chart 390, the horizontal axis represents distance, while the vertical axis represents a signal magnitude. Within chart 390 the dots 394 represent the location of true objects present within the environment of the radar system at the distances shown. In that environment, the output of step 314 of method 300 may be represented by trace 392 of FIG. 3C. As depicted, the super resolution spectral estimation algorithm is formed as a plurality of sharp peaks, where each peak coincides with the location of a real-world objects 394. As is apparent from the graph of FIG. 3C, the sharp peaks in trace 392 can result in relatively straight-forward identification of nearby objection locations.

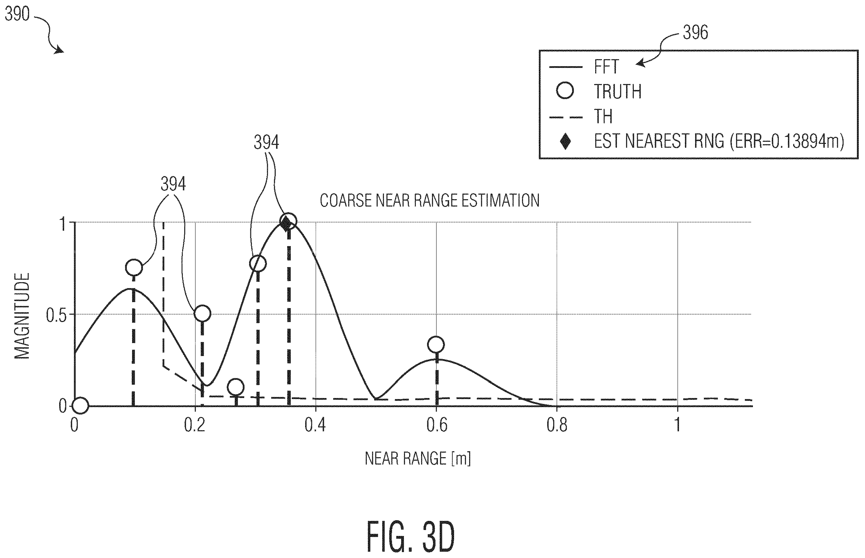

In contrast, FIG. 3D shows an output of a conventional object detection algorithm that may be generated in the same scene as that used to generate the example of FIG. 3C. Specifically, within FIG. 3D, trace 396 represents the output of a conventional solution that has lower resolution. Consequently, as depicted in FIG. 3D, trace 396 does not exhibit local peaks around the objects 394 that were present within the original scene.

Returning to FIG. 3A, once determined, the fine-near target ranges are analyzed in step 318 to determine a set of near-range targets using a super-resolution spectral estimation algorithm. Those target estimates, once determined, are reported to a vehicle control system in step 316.

Finally in step 320, the target information as determined by step 318 for a number of different channels may be combined (e.g., via interpolation of the range-spectrum slices at the obtained fine near-ranges) to generate another set of target data that can be output to a vehicle control system in step 322. The vehicle control system can then use the fine near-range data received in steps 316 and 322 to determine the location, movement, and/or DOA of nearby objects to refine operations of various vehicle control and safety systems.

In step 324 the system determines whether there are any remaining near-range target clusters to be processed. If so, the method returns to step 308 to process the next target cluster. If no target clusters remain, the method moves on to step 326 and ends.

In real-world vehicle radar system applications, the radar systems can often inadvertently detect radar reflections (i.e., interference) from the vehicle's own bumper (or other vehicle body structures that are in proximity to the vehicle's own radar systems or false reflection signals that may result from component spill-over in which electrical fields being generated by one set of components within the vehicle radar systems can cause electrical signals to be induced within other components of the radar system. When processing received radar signals to identify, with precision, near-range targets, it may be beneficial to remove the effects of these bumper reflections and spill-over signals before processing the received signals to identify near-range targets.

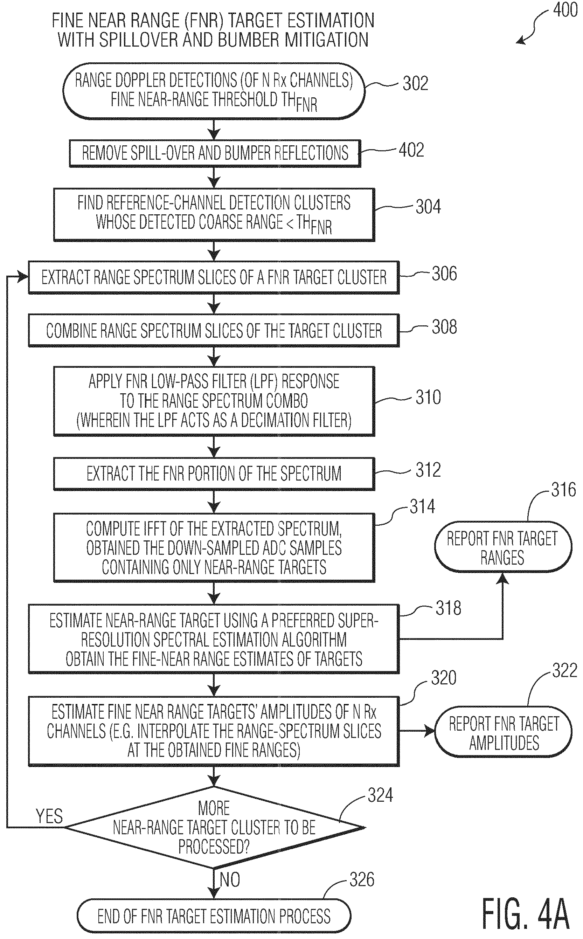

Although any suitable approach could be utilized in accordance with the present disclosure to remove bumper reflections and spill-over signals from signals being processed, FIG. 4A depicts an example method 400 for performing near-range target estimation that includes a step of removing interference caused by bumper reflection and spill-over from the input signals being processed.

As illustrated in FIG. 4A, many of the method steps are equivalent to those described above with respect to FIG. 3A. As such, steps that are labeled with element numbers that appear in FIG. 3A are equivalent to those steps and the corresponding description provided above. Specifically, with reference to FIG. 4A it is apparent that method 400 is similar to method 300 except for the inclusion of preliminary step 402 in which bumper reflections and spill-over effects are removed.

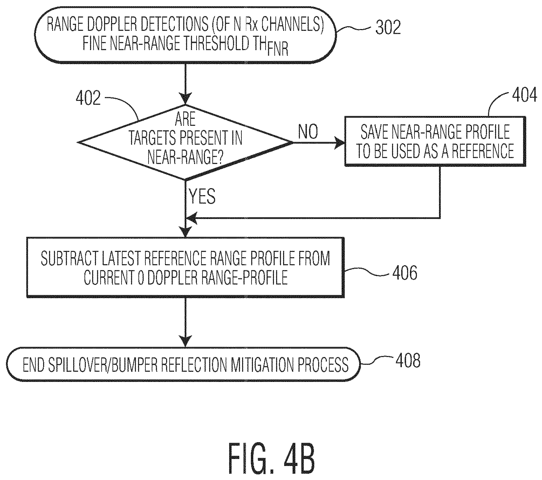

FIG. 4B is a flow chart depicting detail of the steps involved in performing step 402 of FIG. 4A. Specifically, with reference to FIG. 4B after receiving the inputs to method 400 from step 302, the system determines, in step 402, whether any near-range targets are currently being detected by determining whether any values in the range-Doppler matrix exceed a predetermined threshold indicative of a detected target. If not, in step 404, the signals currently being received and processed by the radar system include only those signals being generated by bumper reflections and spill-over effects. As such, the current signal profile (e.g., a 0-Doppler signal profile) can be stored into a memory accessible to the controller executing method 400 (e.g., controller 110 of FIG. 2). The 0-Doppler profile will generally include reflection data for targets that are not moving (or moving slowly) with respect to the radar system and, therefore, represents an optimal profile for characterizing reflections origination from the vehicle's bumper and/or due to spill-over. That signal profile can then be subtracted from later signals received by the system to subtract-out those bumper reflection and spill-over signal effects.

Consequently, if in step 402 the system determines that near-range targets are present, in step 406 the signal profile stored in step 404 can be subtracted from the input signal to remove the bumper reflection and spill-over effects. With those effects removed, the spill-over and bumper reflection removal process ends in step 408 and the method returns to step 304 of FIG. 4A.

In another embodiment of the present disclosure, the present near-range target estimation approach may be modified to include analysis of range spectrum slices of the input range profile data. In this approach, a typical radar data frame is divided into sub-frames that represent range spectrum slices, each associated with different ranges or distances, and each sub-frame is processed in accordance with the present disclosure (e.g., utilizing the approach of method 300, described above). With the different subframes processed individually, the range of the nearest target within each sub-frame is saved into a vector. The vector is sorted, and the median value of the vector may be determined to be the distance to a nearest object. In some embodiments, the distance to the nearest object may be set equal to the value within the sorted vector that is closest to the median value of all values in the vector, where the value also falls within a particular range of the determined median value (e.g., within a predetermined number of standard deviations of the determined median value) and where the median value is determined with a particular confidence level (e.g., p-value). In some embodiments, the distance to the nearest object may be determined to be the median value with some offset applied (e.g., -0.5 m, -1 m, or -2 m). The implementation offers a trade-off between performance and signal-to-noise ratio (SNR). The performance of this method may be improved by the sorting/clustering procedure, which is configured to remove outliers, while the SNR is reduced due to sub-framing. However, high SNR is generally assured by the low path-loss suffered by signals reflected from near-range objects.

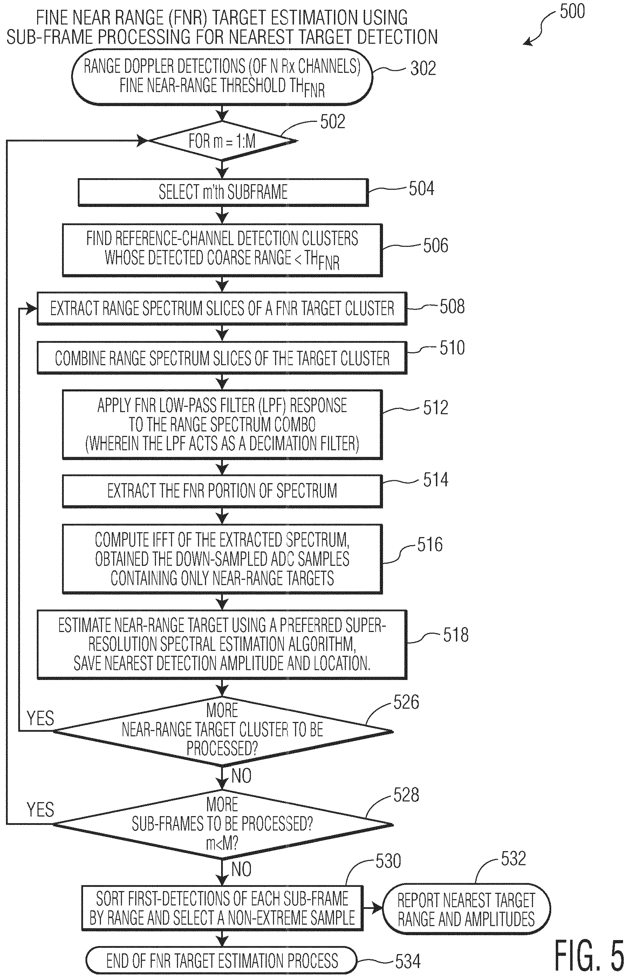

FIG. 5 is a flowchart depicting a method 500 for performing fine near range target detection (e.g., fine near range target detection 202 of FIG. 2) by processing subframe data. In step 502, method 500 receives as an input an identification of a number of range-Doppler subframes that contain target data. The subframes may be generated by grouping range profiles into a number (M) of sub-frames for a subset of chirps present in the originally transmitted radar signals. In this manner, instead of processing all chirps in the received radar signal collectively to construct a complete (and large) range-Doppler matrix, only a subset of chirps is processed to construct a number of smaller range-Doppler matrixes, which are referred to as sub-frames. Each of these smaller range-Doppler sub-frames has their own 0-Doppler range profile. For each sub-frame, a range-Doppler map is generated. The range-Doppler maps contain amplitude information regarding the scene. Each point in the map (each pixel, or each element in a matrix), is defined by two coordinates, range and velocity. Therefore it is possible to determine magnitudes of radar signals received as reflections from potential targets at certain ranges and velocities. The range-Doppler maps can then each be analyzed to perform target identification in each range-Doppler map. Sub-frames for which targets were detected are received as inputs at step 502. Additionally, at step 502 method 500 receives an identification of a range threshold value (TH_{FNR}) that designates a maximum range for a potential target to be selected for fine near-range processing. In various embodiments, TH_{FNR} may be set to a value between 1 m to 5 m, although other thresholds may be used depending upon the particular application.

In step 502 a counter is set to increment, starting at a value of 1, through the number of subframes M to be processed. This counter is utilized by method 500 to iterate through each subframe in the set of subframes having detections.

In step 504 the current M'th subframe is selected out of those received at step 502.

In step 506 targets are identified within the M'th subframe having coarse range indications that are less than the threshold value TH_{FNR} are identified. At the completion of step 506, therefore, a listing of potential near-range targets have been identified for the subframe M, where each potential near-range target is associated with a particular range value.

In step 508, a first one of the potential near-range targets is selected and processed. Specifically, for the first potential near-range target, the entire signal encoded into the range-Doppler matrix at the range associated with the first target is extracted out of each range Doppler matrix (e.g., range-Doppler matrix 154), to generate a set of range spectrum slices 352 (e.g., range spectrum slices 352) for that particular near-range target. In some embodiments, this involves only extracting a single signal (i.e., a row) out of each range-Doppler matrix although in some embodiments multiple neighboring rows signals may be extracted, where those neighboring signals have data value exceeding some non-noise threshold magnitude indicating that those neighboring signals may include useful target information.

With the range spectrum slices determined, in step 510 the range slices for each channel are combined to generate a single one-dimensional range cluster for the potential target being processed.

In step 512, a low pass filter (e.g., a smoothing filter) is applied in the frequency domain to the data values of the range cluster to select for near-range targets. The low pass filter is configured to operate as a decimation filter, which may reduce the effective sampling rate associated with the output of the low pass filter and removes data associated with non-near-range targets from the processed signal.

After executing the low pass filter, in step 514 the portion of the signal output by the low pass filter for distances less than TH_{FNR} can be extracted to generate a fine-near range signal (see block 358 in FIG. 3B). Generally, the fine-near range signal represents an up-sampled or super-resolution range-profile containing only information regarding targets in the near-range of the radar system.

In step 516 an inverse fast Fourier transform (IFFT) (see block 360 in FIG. 3B) is computed on fine-near range signal output of the low-pass filter to generate a time-domain set of signal magnitudes associated with the near-range target being processed.

The time domain values generated by step 516 are then processed using super resolution spectral estimation algorithms in step 518 to identify localized peaks within the time domain values. At this point in the algorithm, the time domain values comprise a range profile that describes, at different distances away from the radar transmitter (e.g., transmitting antenna elements 102) a magnitude of the received radar signal at that distance.

In step 526, the system determines whether there are any remaining near-range target clusters to be processed in the current subframe M. If so, the method returns to step 508 to process the next target cluster. If no target clusters remain, the method moves on to step 528 where a determination is made as to whether any additional subframes remain to be processed. If so, the method returns to step 502 to increment the counter value M and process the next subframe.

When all subframes have been processed in step 530 the closest detected targets in the set of M subframes that was processed are identified. The range and amplitude of that closest detected target can then be reported a vehicle control system in step 532. The control system can then use the fine near-range data received in step 532 to determine the location (and movement or DOA) of nearby objects to refine operations of various vehicle control and safety system. In step 534 the algorithm exits.

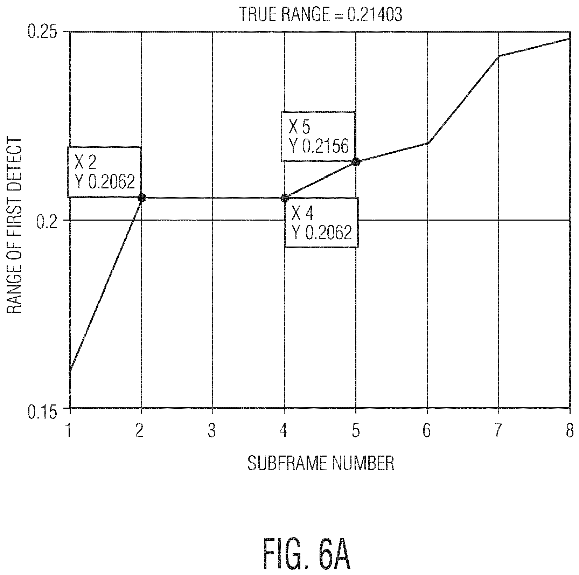

By performing the method of FIG. 5 on individual subframes within the input radar signal data frames (e.g., the input range-Doppler subframe data) the target method may be configured to detect the closest of a set of near-range targets, even in scene with many potential targets falling within that near range. To illustrate, FIG. 6A is a chart depicting, on the horizontal axis, a number of range spectrum slices that may be processed according to the method of FIG. 5 and, on the vertical axis, a nearest detection distance for potential targets within the corresponding subframe. As illustrated, the nearest target detection range for each range spectrum slices may be different. As such, with range spectrum slices or subframe processing, a target detection range may be determined for each individual range spectrum slice. Then, in accordance with the algorithm of FIG. 5, the target detection range associated with one of the individual range spectrum slices may be selected as the nearest detected target range. If this individual range spectrum slice analysis were not used and instead the data of all range spectrum slices are analyzed together as a single collection, only a single nearest target for the entire collection of subframes would be identified, potentially resulting in an inaccurate determination of the nearest target distance.

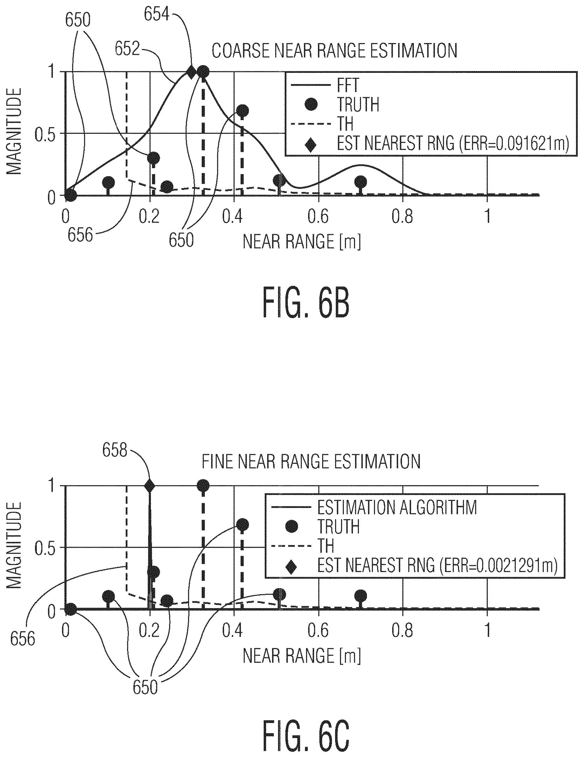

This is further illustrated in FIGS. 6B and 6C. FIG. 6B is a chart depicting on the vertical axis a magnitude of a reflected radar signal for a given distance, where distance is indicated on the horizontal axis. As illustrated in FIG. 6B, the scene includes a number of targets 650 and the resulting reflected radar signal is depicted by trace 652. A conventional target detection algorithm may evaluate the entire signal represented by trace 652 to make the determination that the nearest target reflected in that signal is at point 654 (e.g., at about .3 meters). The conventional algorithm may make that determination because the signal associated with the target 650 at that distance has the highest magnitude reflected signal of the detected peaks in trace 652 that exceeds the detection threshold indicated by line 656.

In contrast, FIG. 6C shows the same chart as that of FIG. 6B, but where the same received radar signal is evaluated by determining detected targets in a number of range spectrum slices in accordance with the method depicted in FIG. 5. In that case, the peaks of the different range spectrum slices associated with the various targets 650 are evaluated individually (e.g., via comparison to the detection threshold indicated by line 656). The nearest detected target (e.g., illustrated by point 658) can then be designated as the nearest target. As such, even though the magnitude of the reflected radar signal associated with the target 650 at the distance of 0.2 m may not be as large as that of the peak associated with the 0.3 m target, the 0.2 m target will still be designated as the nearest detected target with its corresponding range indicating the range of the closest potential target.

In some aspects, the techniques described herein relate to an automotive radar system, including: at least one transmitter and at least one receiver, wherein the at least one transmitter and the at least one receiver are configured to transmit and receive radar signals, wherein the at least one transmitter and the at least one receiver are coupled to a vehicle; and a processor configured to: receive, from the at least one receiver, a first received radar signal, process the first received radar signal to generate a range-Doppler data frame, identify a first target cluster at a first range in the range-Doppler data frame, determine that the first range is less than a threshold distance, extract a range spectrum data set from the range-Doppler data frame, wherein the range spectrum data set is associated with the first range, apply a low-pass filter to the range spectrum data set to extract a first portion of a spectrum of the range spectrum data set, compute an inverse fast Fourier transform (IFFT) of the first portion of the spectrum to generate a time-domain set of signal magnitudes, apply a super-resolution spectral estimation to the time-domain set of signal magnitudes to identify a first range of a first target associated with the first target cluster, and transmit the first range to a vehicle controller.

In some aspects, the processor may be configured to, before receiving the first received signal: determine, based on a second received radar signal, that an object is not detected by the automotive radar system; and store, into a memory accessible to the processor, a signal profile based upon the second received radar signal.

In some aspects, the processor may be further configured to subtract at least a portion of the signal profile from the range-Doppler data frame to remove at least one of bumper reflection signal and radar system component spill-over interference from the range-Doppler data frame.

In some aspects, the signal profile may be a 0-Doppler range profile.

In some aspects, the received radar signal may be a digital signal and processing the received radar signal to generate the range-Doppler data frame includes performing a first fast Fourier transform (FFT) on the digital signal in a first direction corresponding to range to generate a range data frame and performing a second FFT on the range data frame in a second direction corresponding to relative velocity to generate the range-Doppler data frame.

In some aspects, the threshold distance may be equal to or less than five meters.

In some aspects, the vehicle controller may be configured to modify an operation of a driver-assistance system based upon the first range.

In some aspects, the techniques described herein relate to a signal processing system, including: a radar system; and a processor coupled to the radar system, the processor being configured to: receive a first subframe of a first range-Doppler data frame, wherein the first range-Doppler frame is generated based upon a radar signal received from the radar system, identify a first target cluster at a first range in the first subframe, determine that the first range is less than a threshold distance, extract a first range spectrum data set from the first subframe, wherein the first range spectrum data set is associated with the first range, apply a low-pass filter to the first range spectrum data set to extract a first portion of a first spectrum of the first range spectrum data set, compute an inverse fast Fourier transform (IFFT) of the first portion of the spectrum extracted from the first range spectrum data set to generate a first time-domain set of signal magnitudes, apply a super-resolution spectral estimation to the first time-domain set of signal magnitudes to identify a first range of a first target associated with the first target cluster, receive a second subframe of the first range-Doppler data frame, identify a second target cluster at a second range in the second subframe, determine that the second range is less than the threshold distance, extract a second range spectrum data set from the second subframe, wherein the second range spectrum data set is associated with the second range, apply the low-pass filter to the second range spectrum data set to extract a second portion of a second spectrum of the second range spectrum data set, compute the inverse fast Fourier transform (IFFT) of the second portion of the spectrum extracted from the second range spectrum data set to generate a second time-domain set of signal magnitudes, apply the super-resolution spectral estimation to the second time-domain set of signal magnitudes to identify a second range of a second target associated with the second target cluster, and transmitting at least one of the first range of the first target and the second range of the second target to a vehicle controller.

In some aspects, the processor may be configured to, before receiving the first received signal: determine, based on a previously received radar signal received from the radar system, that an object is not detected by the radar system; and store, into a memory accessible to the processor, a signal profile based upon the previously received radar signal.

In some apsects, the processor may be further configured to subtract at least a portion of the signal profile from the range-Doppler data frame to remove at least one of bumper reflection signal and radar system component spill-over interference from the range-Doppler data frame.

In some aspects, the signal profile may be a 0-Doppler range profile.

In some aspects, the threshold distance may be equal to or less than five meters.

In some apsects, the vehicle controller may be configured to modify an operation of a driver-assistance system based upon the at least one of the first range of the first target and the second range of the second target.

In some aspects, the processor may be further configured to transmit at least one of the first range of the first target and the second range of the second target to a vehicle controller by: determining that the first range of the first target is less than the second range of the second target; and transmitting the first range of the first target to the vehicle controller.

In some aspects, the techniques described herein relate to a method, including: receiving, from a radar system, a first received radar signal; processing the first received radar signal to generate a range-Doppler data frame, identifying a first target cluster at a first range in the range-Doppler data frame, determining that the first range is less than a threshold distance, extracting a range spectrum data set from the range-Doppler data frame, wherein the range spectrum data set is associated with the first range, applying a low-pass filter to the range spectrum data set to extract a first portion of a spectrum of the range spectrum data set, computing an inverse fast Fourier transform (IFFT) of the first portion of the spectrum extracted from the range spectrum data set to generate a time-domain set of signal magnitudes, applying a super-resolution spectral estimation to the time-domain set of signal magnitudes to identify a second range of a first target associated with the first target cluster, and transmitting the second range of the first target to a vehicle controller.

In some aspects, the method may further comprising, before receiving the first received signal: determining, based on a second received radar signal, that an object is not detected by the radar system; and storing, into a memory, a signal profile based upon the second received radar signal.

In some aspects, the method may further comprising using at least a portion of the signal profile to modify the range-Doppler data frame to remove at least one of bumper reflection signal and radar system component spill-over interference from the range-Doppler data frame.

In some aspects, the method may further comprising storing the signal profile further comprises storing a 0-Doppler range profile into the memory, wherein the 0-Doppler range profile is derived from the received radar signal.

In some aspects, the received radar signal may be a digital signal and the method may further comprising processing the received radar signal to generate the range-Doppler data frame by performing a first fast Fourier transform (FFT) on the digital signal in a first direction corresponding to range to generate a range data frame and performing a second FFT on the range data frame in a second direction corresponding to relative velocity to generate the range-Doppler data frame.

In some aspects, the method may further comprising determining that the threshold distance is equal to or less than five meters.

Although the examples have been described with reference to automotive radar systems, the systems and methods described herein may be implemented in conjunction with other types of radar systems. Devices or components described as being separate may be integrated in a single physical device. Also, the units and circuits may be suitably combined in one or more semiconductor devices. That is, the devices described herein may be implemented as a single integrated circuit, or as multiple integrated circuits.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node). The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

## Claims

1. An automotive radar system (100), comprising:
at least one transmitter (11) and at least one receiver (12), wherein the at least one transmitter and the at least one receiver are configured to transmit and receive radar signals, wherein the at least one transmitter and the at least one receiver are configured to be coupled to a vehicle; and
**characterized by** a processor (20) that is configured to:
receive, from the at least one receiver, a first received radar signal,
process the first received radar signal to generate a range-Doppler data frame,
identify a first target cluster at a first range in the range-Doppler data frame,
determine that the first range is less than a threshold distance,
extract a range spectrum data set from the range-Doppler data frame, wherein the range spectrum data set is associated with the first range,
apply a low-pass filter to the range spectrum data set to extract a first portion of a spectrum of the range spectrum data set,
compute an inverse fast Fourier transform (IFFT) of the first portion of the spectrum to generate a time-domain set of signal magnitudes,
apply a super-resolution spectral estimation to the time-domain set of signal magnitudes to identify a first range of a first target associated with the first target cluster, and
transmit the first range to a vehicle controller.

2. The automotive radar system of claim 1, wherein the processor is configured to, before receiving the first received signal:
determine, based on a second received radar signal, that an object is not detected by the automotive radar system; and
store, into a memory accessible to the processor, a signal profile based upon the second received radar signal.

3. The automotive radar system of claim 2, wherein the processor is further configured to subtract at least a portion of the signal profile from the range-Doppler data frame to remove at least one of bumper reflection signal and radar system component spill-over interference from the range-Doppler data frame.

4. The automotive radar system of claim 3, wherein the signal profile is a 0-Doppler range profile.

5. The automotive radar system of any one of claims 1 to 4, wherein the received radar signal is a digital signal and processing the received radar signal to generate the range-Doppler data frame includes performing a first fast Fourier transform (FFT) on the digital signal in a first direction corresponding to range to generate a range data frame and performing a second FFT on the range data frame in a second direction corresponding to relative velocity to generate the range-Doppler data frame.

6. The automotive radar system of any one of claims 1 to 5, wherein the threshold distance is equal to or less than five meters.

7. A signal processing system, comprising:
a radar system; and
**characterized by** a processor that is coupled to the radar system, the processor being configured to:
receive a first subframe of a first range-Doppler data frame, wherein the first range-Doppler frame is generated based upon a radar signal received from the radar system,
identify a first target cluster at a first range in the first subframe,
determine that the first range is less than a threshold distance,
extract a first range spectrum data set from the first subframe, wherein the first range spectrum data set is associated with the first range,
apply a low-pass filter to the first range spectrum data set to extract a first portion of a first spectrum of the first range spectrum data set,
compute an inverse fast Fourier transform (IFFT) of the first portion of the spectrum extracted from the first range spectrum data set to generate a first time-domain set of signal magnitudes,
apply a super-resolution spectral estimation to the first time-domain set of signal magnitudes to identify a first range of a first target associated with the first target cluster,
receive a second subframe of the first range-Doppler data frame,
identify a second target cluster at a second range in the second subframe,
determine that the second range is less than the threshold distance,
extract a second range spectrum data set from the second subframe, wherein the second range spectrum data set is associated with the second range,
apply the low-pass filter to the second range spectrum data set to extract a second portion of a second spectrum of the second range spectrum data set,
compute the inverse fast Fourier transform (IFFT) of the second portion of the spectrum extracted from the second range spectrum data set to generate a second time-domain set of signal magnitudes,
apply the super-resolution spectral estimation to the second time-domain set of signal magnitudes to identify a second range of a second target associated with the second target cluster, and
transmitting at least one of the first range of the first target and the second range of the second target to a vehicle controller.

8. The signal processing system of claim 7, wherein the processor is configured to, before receiving the first received signal:
determine, based on a previously received radar signal received from the radar system, that an object is not detected by the radar system; and
store, into a memory accessible to the processor, a signal profile based upon the previously received radar signal.

9. A method (300), comprising:
receiving, from a radar system, a first received radar signal;
processing the first received radar signal to generate a range-Doppler data frame,
**characterized by**
identifying a first target cluster at a first range in the range-Doppler data frame,
determining that the first range is less than a threshold distance,
extracting a range spectrum data set from the range-Doppler data frame, wherein the range spectrum data set is associated with the first range,
applying a low-pass filter to the range spectrum data set to extract a first portion of a spectrum of the range spectrum data set,
computing an inverse fast Fourier transform (IFFT) of the first portion of the spectrum extracted from the range spectrum data set to generate a time-domain set of signal magnitudes,
applying a super-resolution spectral estimation to the time-domain set of signal magnitudes to identify a second range of a first target associated with the first target cluster, and
transmitting the second range of the first target to a vehicle controller.

10. The method of claim 9, further comprising, before receiving the first received signal:
determining, based on a second received radar signal, that an object is not detected by the radar system; and
storing, into a memory, a signal profile based upon the second received radar signal.

11. The method of claim 10, further comprising using at least a portion of the signal profile to modify the range-Doppler data frame to remove at least one of bumper reflection signal and radar system component spill-over interference from the range-Doppler data frame.

12. The method of claim 10 or 11, wherein storing the signal profile further comprises storing a 0-Doppler range profile into the memory, wherein the 0-Doppler range profile is derived from the received radar signal.

13. The method of any one of claims 9 to 12, wherein the received radar signal is a digital signal and further comprising processing the received radar signal to generate the range-Doppler data frame by performing a first fast Fourier transform (FFT) on the digital signal in a first direction corresponding to range to generate a range data frame and performing a second FFT on the range data frame in a second direction corresponding to relative velocity to generate the range-Doppler data frame.

14. The method of any one of claims 9 to 13, further comprising determining that the threshold distance is equal to or less than five meters.

## Patentansprüche

1. Automobilradarsystem (100), umfassend:
mindestens einen Sender (11) und mindestens einen Empfänger (12), wobei der mindestens eine Sender und der mindestens eine Empfänger ausgelegt sind zum Senden und Empfangen von Radarsignalen, wobei der mindestens eine Sender und der mindestens eine Empfänger dafür ausgelegt sind, mit einem Fahrzeug gekoppelt zu werden; und
**gekennzeichnet durch** einen Prozessor (20), der ausgelegt ist zum
Empfangen eines ersten empfangenen Radarsignals von dem mindestens einen Empfänger,
Verarbeiten des ersten empfangenen Radarsignals, um einen Entfernungs-Doppler-Datenrahmen zu erzeugen,
Identifizieren eines ersten Zielclusters in einer ersten Entfernung in dem Entfernungs-Doppler-Datenrahmen,
Bestimmen, dass die erste Entfernung kleiner als eine Schwellendistanz ist,
Extrahieren eines Entfernungsspektrumdatensatzes aus dem Entfernungs-Doppler-Datenrahmen, wobei der Entfernungsspektrumdatensatz der ersten Entfernung zugeordnet ist,
Anwenden eines Tiefpassfilters auf den Entfernungsspektrumdatensatz, um einen ersten Teil eines Spektrums des Entfernungsspektrumdatensatzes zu extrahieren,
Berechnen einer IFFT (inversen schnellen Fouriertransformation) des ersten Teils des Spektrums, um einen Zeitbereichssatz von Signalbeträgen zu erzeugen,
Anwenden einer Superauflösungsspektralschätzung auf den Zeitbereichssatz von Signalbeträgen, um eine erste Entfernung eines dem ersten Zielcluster zugeordneten ersten Ziels zu identifizieren, und
Senden der ersten Entfernung zu einer Fahrzeugsteuerung.

2. Automobilradarsystem nach Anspruch 1, wobei der Prozessor vor dem Empfangen des ersten empfangenen Signals ausgelegt ist zum
Bestimmen auf der Basis eines zweiten empfangenen Radarsignals, dass ein Objekt nicht durch das Automobilradarsystem detektiert wird; und
Speichern eines Signalprofils auf der Basis des zweiten empfangenen Radarsignals in einem dem Prozessor zugänglichen Speicher.

3. Automobilradarsystem nach Anspruch 2, wobei der Prozessor ferner ausgelegt ist zum Subtrahieren mindestens eines Teils des Signalprofils von dem Entfernungs-Doppler-Datenrahmen, um ein Stoßfängerreflexionssignal und/oder Radarsystemkomponenten-Überlaufstörungen aus dem Entfernungs-Doppler-Datenrahmen zu entfernen.

4. Automobilradarsystem nach Anspruch 3, wobei das Signalprofil ein 0-Doppler-Entfernungsprofil ist.

5. Automobilradarsystem nach einem der Ansprüche 1 bis 4, wobei das empfangene Radarsignal ein digitales Signal ist und Verarbeiten des empfangenen Radarsignals zum Erzeugen des Entfernungs-Doppler-Datenrahmens Ausführen einer ersten FFT (schnellen Fouriertransformation) an dem digitalen Signal in einer ersten Richtung, die Entfernung entspricht, zum Erzeugen eines Entfernungsdatenrahmens und Ausführen einer zweiten FFT an dem Entfernungsdatenrahmen in einer zweiten Richtung, die relativer Geschwindigkeit entspricht, zum Erzeugen des Entfernungs-Doppler-Datenrahmens umfasst.

6. Automobilradarsystem nach einem der Ansprüche 1 bis 5, wobei die Schwellendistanz kleiner oder gleich fünf Meter ist.

7. Signalverarbeitungssystem, umfassend:
ein Radarsystem; und
**gekennzeichnet durch** einen Prozessor, der mit dem Radarsystem gekoppelt ist, wobei der Prozessor ausgelegt ist zum
Empfangen eines ersten Subrahmens eines ersten Entfernungs-Doppler-Datenrahmens, wobei der erste Entfernungs-Doppler-Rahmen auf der Basis eines von dem Radarsystem empfangenen Radarsignals erzeugt wird,
Identifizieren eines ersten Zielclusters in einer ersten Entfernung in dem ersten Subrahmen,
Bestimmen, dass die erste Entfernung kleiner als eine Schwellendistanz ist,
Extrahieren eines ersten Entfernungsspektrumdatensatzes aus dem ersten Subrahmen, wobei der erste Entfernungsspektrumdatensatz der ersten Entfernung zugeordnet ist,
Anwenden eines Tiefpassfilters auf den ersten Entfernungsspektrumdatensatz, um einen ersten Teil eines ersten Spektrums des ersten Entfernungsspektrumdatensatzes zu extrahieren,
Berechnen einer IFFT (inversen schnellen Fouriertransformation) des aus dem ersten Entfernungsspektrumdatensatz extrahierten ersten Teils des Spektrums, um einen ersten Zeitbereichssatz von Signalbeträgen zu erzeugen,
Anwenden einer Superauflösungsspektralschätzung auf den ersten Zeitbereichssatz von Signalbeträgen, um eine erste Entfernung eines dem ersten Zielcluster zugeordneten ersten Ziels zu identifizieren,
Empfangen eines zweiten Subrahmens des ersten Entfernungs-Doppler-Datenrahmens,
Identifizieren eines zweiten Zielclusters in einer zweiten Entfernung in dem zweiten Subrahmen,
Bestimmen, dass die zweite Entfernung kleiner als die Schwellendistanz ist,
Extrahieren eines zweiten Entfernungsspektrumdatensatzes aus dem zweiten Subrahmen, wobei der zweite Entfernungsspektrumdatensatz der zweiten Entfernung zugeordnet ist,
Anwenden des Tiefpassfilters auf den zweiten Entfernungsspektrumdatensatz, um einen zweiten Teil eines zweiten Spektrums des zweiten Entfernungsspektrumdatensatzes zu extrahieren,
Berechnen der IFFT (inversen schnellen Fouriertransformation) des aus dem zweiten Entfernungsspektrumdatensatz extrahierten zweiten Teils des Spektrums, um einen zweiten Zeitbereichssatz von Signalbeträgen zu erzeugen,
Anwenden der Superauflösungsspektralschätzung auf den zweiten Zeitbereichssatz von Signalbeträgen, um eine zweite Entfernung eines dem zweiten Zielcluster zugeordneten zweiten Ziels zu identifizieren, und
Senden der ersten Entfernung des ersten Ziels und/oder der zweiten Entfernung des zweiten Ziels zu einer Fahrzeugsteuerung.

8. Signalverarbeitungssystem nach Anspruch 7, wobei der Prozessor vor dem Empfangen des ersten empfangenen Signals ausgelegt ist zum
Bestimmen auf der Basis eines zuvor empfangenen Radarsignals, das von dem Radarsystem empfangen wird, dass ein Objekt nicht durch das Radarsystem detektiert wird; und
Speichern eines Signalprofils auf der Basis des zuvor empfangenen Radarsignals in einem dem Prozessor zugänglichen Speicher.

9. Verfahren (300), umfassend:
Empfangen eines ersten empfangenen Radarsignals von einem Radarsystem;
Verarbeiten des ersten empfangenen Radarsignals, um einen Entfernungs-Doppler-Datenrahmen zu erzeugen,
**gekennzeichnet durch** Identifizieren eines ersten Zielclusters in einer ersten Entfernung in dem Entfernungs-Doppler-Datenrahmen,
Bestimmen, dass die erste Entfernung kleiner als eine Schwellendistanz ist,
Extrahieren eines Entfernungsspektrumdatensatzes aus dem Entfernungs-Doppler-Datenrahmen, wobei der Entfernungsspektrumdatensatz der ersten Entfernung zugeordnet ist,
Anwenden eines Tiefpassfilters auf den Entfernungsspektrumdatensatz, um einen ersten Teil eines Spektrums des Entfernungsspektrumdatensatzes zu extrahieren,
Berechnen einer IFFT (inversen schnellen Fouriertransformation) des aus dem Entfernungsspektrumdatensatz extrahierten ersten Teils des Spektrums, um einen Zeitbereichssatz von Signalbeträgen zu erzeugen,
Anwenden einer Superauflösungsspektralschätzung auf den Zeitbereichssatz von Signalbeträgen, um eine zweite Entfernung eines dem ersten Zielcluster zugeordneten ersten Ziels zu identifizieren, und
Senden der zweiten Entfernung des ersten Ziels zu einer Fahrzeugsteuerung.

10. Verfahren nach Anspruch 9, das ferner vor dem Empfangen des ersten empfangenen Signals Folgendes umfasst:
Bestimmen auf der Basis eines zweiten empfangenen Radarsignals, dass ein Objekt nicht durch das Radarsystem detektiert wird; und
Speichern eines Signalprofils auf der Basis des zweiten empfangenen Radarsignals in einem Speicher.

11. Verfahren nach Anspruch 10, ferner umfassend: Verwenden mindestens eines Teils des Signalprofils zum Modifizieren des Entfernungs-Doppler-Datenrahmens, um ein Stoßfängerreflexionssignal und/oder Radarsystemkomponenten-Überlaufstörungen aus dem Entfernungs-Doppler-Datenrahmen zu entfernen.

12. Verfahren nach Anspruch 10 oder 11, wobei Speichern des Signalprofils ferner Speichern eines 0-Doppler-Entfernungsprofils in dem Speicher umfasst, wobei das 0-Doppler-Entfernungsprofil aus dem empfangenen Radarsignal abgeleitet wird.

13. Verfahren nach einem der Ansprüche 9 bis 12, wobei das empfangene Radarsignal ein digitales Signal ist, und ferner umfassend: Verarbeiten des empfangenen Radarsignals zum Erzeugen des Entfernungs-Doppler-Datenrahmens durch Ausführen einer ersten FFT (schnellen Fouriertransformation) an dem digitalen Signal in einer ersten Richtung, die Entfernung entspricht, zum Erzeugen eines Entfernungsdatenrahmens und Ausführen einer zweiten FFT an dem Entfernungsdatenrahmen in einer zweiten Richtung, die relativer Geschwindigkeit entspricht, zum Erzeugen des Entfernungs-Doppler-Datenrahmens.

14. Verfahren nach einem der Ansprüche 9 bis 13, ferner umfassend: Bestimmen, dass die Schwellendistanz kleiner oder gleich fünf Meter ist.

## Revendications

1. Système radar automobile (100), comprenant :
au moins un émetteur (11) et au moins un récepteur (12), ledit au moins un émetteur et ledit au moins un récepteur étant configurés pour émettre et recevoir des signaux radar, ledit au moins un émetteur et ledit au moins un récepteur étant configurés pour être couplés à un véhicule ; et
**caractérisé par** un processeur (20) qui est configuré pour :
recevoir, en provenance dudit au moins un récepteur, un premier signal radar reçu,
traiter le premier signal radar reçu pour générer une trame de données distance-Doppler,
identifier un premier groupe de cibles à une première distance dans la trame de données distance-Doppler,
déterminer que la première distance est inférieure à une distance de seuil,
extraire un ensemble de données de spectres de distance de la trame de données distance-Doppler, l'ensemble de données de spectres de distance étant associé à la première distance,
appliquer un filtre passe-bas à l'ensemble de données de spectres de distance pour extraire une première partie d'un spectre de l'ensemble de données de spectres de distance,
calculer une transformée de Fourier rapide inverse (IFFT) de la première partie du spectre pour générer un ensemble de domaine temporel d'amplitudes de signal,
appliquer une estimation spectrale à super-résolution à l'ensemble de domaine temporel d'amplitudes de signal pour identifier une première distance d'une première cible associée au premier groupe de cibles, et
transmettre la première distance à une unité de commande de véhicule.

2. Système radar automobile selon la revendication 1, dans lequel le processeur est configuré, avant de recevoir le premier signal reçu, pour :
déterminer, sur la base d'un second signal radar reçu, qu'un objet n'est pas détecté par le système radar automobile ; et
stocker, dans une mémoire accessible au processeur, un profil de signal basé sur le second signal radar reçu.

3. Système radar automobile selon la revendication 2, dans lequel le processeur est en outre configuré pour soustraire au moins une partie du profil de signal à la trame de données distance-Doppler pour éliminer au moins l'un parmi un signal de réflexion de pare-chocs et un brouillage dû au parasitage par des composants du système radar de la trame de données distance-Doppler.

4. Système radar automobile selon la revendication 3, dans lequel le profil de signal est un profil de distance à Doppler nul.

5. Système radar automobile selon l'une quelconque des revendications 1 à 4, dans lequel le signal radar reçu est un signal numérique et le traitement du signal radar reçu pour générer la trame de données distance-Doppler consiste à effectuer une première transformée de Fourier rapide (FFT) sur le signal numérique dans une première direction correspondant à la distance pour générer une trame de données de distance et à effectuer une seconde FFT sur la trame de données de distance dans une seconde direction correspondant à la vitesse relative pour générer la trame de données distance-Doppler.

6. Système radar automobile selon l'une quelconque des revendications 1 à 5, dans lequel la distance de seuil est égale ou inférieure à cinq mètres.

7. Système de traitement de signal, comprenant :
un système radar ; et
**caractérisé par** un processeur qui est couplé au système radar, le processeur étant configuré pour :
recevoir une première sous-trame d'une première trame de données distance-Doppler, la première trame distance-Doppler étant générée sur la base d'un signal radar reçu en provenance du système radar,
identifier un premier groupe de cibles à une première distance dans la première sous-trame,
déterminer que la première distance est inférieure à une distance de seuil,
extraire un premier ensemble de données de spectres de distance de la première sous-trame, le premier ensemble de données de spectres de distance étant associé à la première distance,
appliquer un filtre passe-bas au premier ensemble de données de spectres de distance pour extraire une première partie d'un premier spectre du premier ensemble de données de spectres de distance,
calculer une transformée de Fourier rapide inverse (IFFT) de la première partie du spectre extrait du premier ensemble de données de spectres de distance pour générer un premier ensemble de domaine temporel d'amplitudes de signal,
appliquer une estimation spectrale à super-résolution au premier ensemble de domaine temporel d'amplitudes de signal pour identifier une première distance d'une première cible associée au premier groupe de cibles,
recevoir une seconde sous-trame de la première trame de données distance-Doppler,
identifier un second groupe de cibles à une seconde distance dans la seconde sous-trame,
déterminer que la seconde distance est inférieure à la distance de seuil,
extraire un second ensemble de données de spectres de distance de la seconde sous-trame, le second ensemble de données de spectres de distance étant associé à la seconde distance,
appliquer le filtre passe-bas au second ensemble de données de spectres de distance pour extraire une seconde partie d'un second spectre du second ensemble de données de spectres de distance,
calculer la transformée de Fourier rapide inverse (IFFT) de la seconde partie du spectre extrait du second ensemble de données de spectres de distance pour générer un second ensemble de domaine temporel d'amplitudes de signal,
appliquer l'estimation spectrale à super-résolution au second ensemble de domaine temporel d'amplitudes de signal pour identifier une seconde distance d'une seconde cible associée au second groupe de cibles, et
transmettre au moins l'une des première et seconde distances de la seconde cible à une unité de commande de véhicule.

8. Système de traitement de signal selon la revendication 7, dans lequel le processeur est configuré, avant de recevoir le premier signal reçu, pour :
déterminer, sur la base d'un signal radar reçu précédemment en provenance du système radar, qu'un objet n'est pas détecté par le système radar ; et
stocker, dans une mémoire accessible au processeur, un profil de signal basé sur le signal radar reçu précédemment.

9. Procédé (300), comprenant :
la réception, en provenance d'un système radar, d'un premier signal radar reçu ;
le traitement du premier signal radar reçu pour générer une trame de données distance-Doppler,
**caractérisé par** l'identification d'un premier groupe de cibles à une première distance dans la trame de données distance-Doppler,
la détermination du fait que la première distance est inférieure à une distance de seuil,
l'extraction d'un ensemble de données de spectres de distance de la trame de données distance-Doppler,
l'ensemble de données de spectres de distance étant associé à la première distance,
l'application d'un filtre passe-bas à l'ensemble de données de spectres de distance pour extraire une première partie d'un spectre de l'ensemble de données de spectres de distance,
le calcul d'une transformée de Fourier rapide inverse (IFFT) de la première partie du spectre extrait de l'ensemble de données de spectres de distance pour générer un ensemble de domaine temporel d'amplitudes de signal,
l'application d'une estimation spectrale à super-résolution à l'ensemble de domaine temporel d'amplitudes de signal pour identifier une seconde distance d'une première cible associée au premier groupe de cibles, et la transmission de la seconde distance de la première cible à une unité de commande de véhicule.

10. Procédé selon la revendication 9, comprenant en outre, avant de recevoir le premier signal reçu :
la détermination, sur la base d'un second signal radar reçu, du fait qu'un objet n'est pas détecté par le système radar ; et
le stockage, dans une mémoire, d'un profil de signal basé sur le second signal radar reçu.

11. Procédé selon la revendication 10, comprenant en outre l'utilisation d'au moins une partie du profil de signal pour modifier la trame de données distance-Doppler pour éliminer au moins l'un parmi un signal de réflexion de pare-chocs et un brouillage dû au parasitage par des composants du système radar de la trame de données distance-Doppler.

12. Procédé selon la revendication 10 ou 11, dans lequel le stockage du profil de signal comprend en outre le stockage d'un profil de distance à Doppler nul dans la mémoire, le profil de distance à Doppler nul étant dérivé du signal radar reçu.

13. Procédé selon l'une quelconque des revendications 9 à 12, dans lequel le signal radar reçu est un signal numérique et comprenant en outre le traitement du signal radar reçu pour générer la trame de données distance-Doppler en effectuant une première transformée de Fourier rapide (FFT) sur le signal numérique dans une première direction correspondant à la distance pour générer une trame de données de distance et l'exécution d'une seconde FFT sur la trame de données de distance dans une seconde direction correspondant à la vitesse relative pour générer la trame de données distance-Doppler.

14. Procédé selon l'une quelconque des revendications 9 à 13, comprenant en outre la détermination du fait que la distance de seuil est égale ou inférieure à cinq mètres.
